# EUROPEAN PATENT APPLICATION

(11) **EP 2 610 842 A2**
(43) Date of publication of application: **03.07.2013**
(21) Application number: 12186457.3
(22) Date of filing: 27.09.2012
(51) Int. Cl.: G09G 3/20, H04N 1/60, H04N 9/67, H04N 5/44, G06F 3/048

(54) **Display apparatus and method for displaying image**

(30) Priority: 28.12.2011 KR 20110144584
(71) Applicant: Samsung Electronics Co., Ltd., Suwon-si, Gyeonggi-do, 443-742 (KR)
(72) Inventor: Yun, Sang-un, Seoul (KR); Sung, Jun-ho, Seoul (KR)
(74) Representative: Fearnside, Andrew Simon

(57) **Abstract**

A display apparatus is provided. The display apparatus includes an input unit which receives an image signal, a display panel unit, a determination unit which determines a color gamut of the image signal, an adjustment unit which adjusts a color gamut of the display panel unit based on the color gamut of the image signal, and a control unit which controls the display panel unit to display the image signal within the adjusted color gamut of the display panel unit.

## Description

### CROSS-REFERENCE TO RELATED APPLICATIONS

This application claims the benefit of Korean Patent Application No. 2011-0144584, filed in the Korean Intellectual Property Office on December 28, 2011, the disclosure of which is incorporated herein by reference.

### BACKGROUND

### 1. Field

Aspects of the present invention relate to a display apparatus and a method for displaying an image, and more particularly, to a display apparatus which is capable of adjusting a color gamut of an image signal displayed on a display panel adaptively according to a color gamut of an input image signal and a method for displaying an image thereof.

### 2. Related Art

A display apparatus is an apparatus which processes digital or analog image signals, received from received from external sources or stored in internal storage device in files of various formats, and displays the processed image signals.

Recently, a display apparatus may receive an image signal from various apparatuses and display the received image signal. However, a prior art display apparatus displays an input image signal only within a default color gamut set in the display apparatus.

Specifically, a prior art display apparatus displays an input image signal only within a default color gamut even if the input image signal has a color gamut which is broader than the default color gamut. For example, if an image signal having a color gamut broader than a broadcast signal a display apparatus displays an image signal only within a default color gamut even if the display apparatus is capable of supporting the color gamut of the input image signal.

### SUMMARY

According to an aspect of an exemplary embodiment, there is provided a display apparatus which is capable of adjusting a color gamut of an image signal displayed on a display panel adaptively according to a color gamut of an input image signal and a method for displaying an image thereof. According to the present invention there is provided an apparatus and method as set forth in the appended claims. Other features of the invention will be apparent from the dependent claims, and the description which follows.

According to an aspect of an exemplary embodiment, there is provided a display apparatus including an input unit which receives an image signal, a display panel unit which displays the input image signal, a determination unit which determines a color gamut of the input image signal, an adjustment unit which adjusts a color gamut of the display panel unit based on the determined color gamut, and a control unit which controls the display panel unit to display the image signal within the adjusted color gamut of the display panel unit.

The determination unit may determine a color gamut of the input image signal based on at least one of information regarding a format title of the image signal and information regarding color standard of the image signal.

The determination unit may determine a color gamut based on apparatus information of a device which provides the image signal.

The determination unit, if a device providing an image signal is changed, may determine a color gamut of an image signal provided by the device.

The adjustment unit, if the determined color gamut is within a color gamut supported by the display panel unit, may adjust a color gamut of the display panel unit to the determined color gamut.

The display panel unit may display the determined color gamut and a color gamut of the display panel unit, and the display apparatus may further include a manipulation unit which receives a setting of a color gamut of the image signal, and the manipulation unit may adjust the set color gamut to a color gamut of the display panel unit.

The display panel unit may display a user interface window including a first area to display the determined color gamut and a color gamut of the display panel unit, a second area to display a preview image according to a current color gamut of the display panel unit, and a third area to display a second preview image according to an adjust color gamut.

The user interface window may further include a fourth area which displays information regarding the image signal.

The apparatus may further include an image compensation unit which performs color compensation to compensate the input image signal to the adjusted color gamut of a display panel unit, and the display panel may display the image signal of which color is compensated.

The display panel unit may be an Organic Light Emitting Diodes (OLED) panel.

According to an aspect of another exemplary embodiment, there is provided a method for displaying an image using a display panel including receiving an image signal, determining a color gamut of the input image signal, adjusting a color gamut of the display panel unit based on the determined color gamut, and displaying the image signal within the adjusted color gamut of the display panel unit.

The determining may include determining a color gamut of the input image signal based on at least one of information regarding a format title of the image signal and information regarding color standard of the image signal.

The determining may include determining a color gamut based on apparatus information of a device which provides the image signal.

The determining may include, if a device providing an image signal is changed, determining a color gamut of an image signal provided by the device.

The adjusting may include, if the determined color gamut is within a color gamut supported by the display panel unit, adjusting a color gamut of the display panel unit to the determined color gamut

The method may further include displaying the determined color gamut and a color gamut of the display panel unit and receiving a setting of a color gamut of the image signal, and the adjusting may include adjusting the set color gamut to a color gamut of the display panel unit.

The displaying may include displaying a user interface window including a first area to display the determined color gamut and a color gamut of the display panel unit, a second area to display a preview image according to a current color gamut of the display panel unit, and a third area to display a second preview image according to an adjust color gamut.

The user interface window may further include a fourth area which displays information regarding the image signal.

The displaying may include performing color compensation to compensate the input image signal to the adjusted color gamut of a display panel unit and displaying the image signal of which color is compensated.

The display panel unit may be an Organic Light Emitting Diodes (OLED) panel.

### BRIEF DESCRIPTION OF THE DRAWINGS

These and/or other aspects and advantages of the inventive concept will become apparent and more readily appreciated from the following description of exemplary embodiments, taken in conjunction with the accompanying drawings, of which:
FIG. 1 is a block diagram illustrating configuration of a display apparatus according to an exemplary embodiment;
FIG. 2 illustrates an operation of a display apparatus according to an exemplary embodiment;
FIGS. 3 and 4 illustrate an operation of an image compensation unit in FIG. 1;
FIG. 5 illustrates an example of a user interface window according to an exemplary embodiment; and
FIG. 6 is a flowchart illustrating a method for displaying an image according to an exemplary embodiment.

### DETAILED DESCRIPTION OF EXEMPLARY EMBODIMENTS

Reference will now be made in detail to exemplary embodiments, examples of which are illustrated in the accompanying drawings, wherein like reference numerals refer to like elements throughout. Exemplary embodiments are described below with reference to the figures.

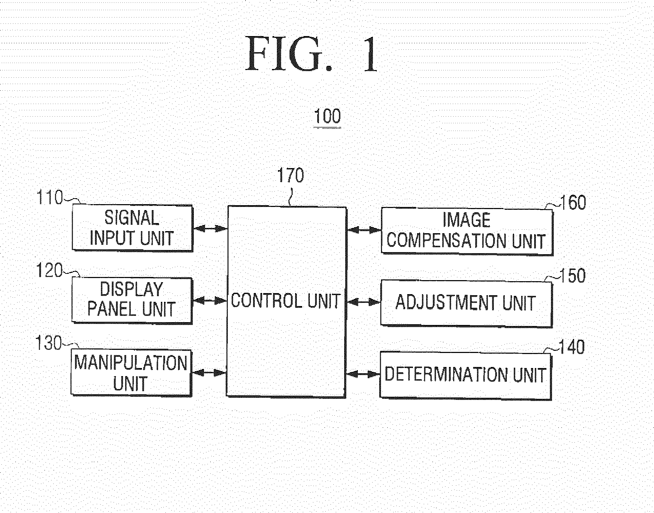

FIG. 1 is a block diagram illustrating configuration of a display apparatus according to an exemplary embodiment.

Referring to FIG. 1, a display apparatus 100 according to an exemplary embodiment comprises a signal input unit 110, a display panel unit 120, a manipulation unit 130, a determination unit 140, an adjustment unit 150, an image compensation unit 160, and a control unit 170.

The signal input unit 110 receives an image signal. Specifically, the signal input unit 110 may receive an image signal from an external image providing apparatus. Herein, the image signal may be a broadcast signal which is transmitted from a broadcasting station or a satellite dish, image content transmitted from a DVD player, a Blue Ray player, etc., or image content transmitted from a mobile phone, a personal computer, etc. The signal input unit may receive the broadcast signal or image content through a wired connection, a wireless connection, over a network, etc.

The display panel unit 120 displays an input image signal. Specifically, the display panel unit 120 may display an image signal received through the signal input unit 110 directly, or may display an image signal of which color is compensated in the image compensation unit 160 which will be explained later. The display panel unit 120 may be a Liquid Crystal Display (LCD) panel, an Organic Light Emitting Diode (OLED) panel, a Plasma display panel, etc.

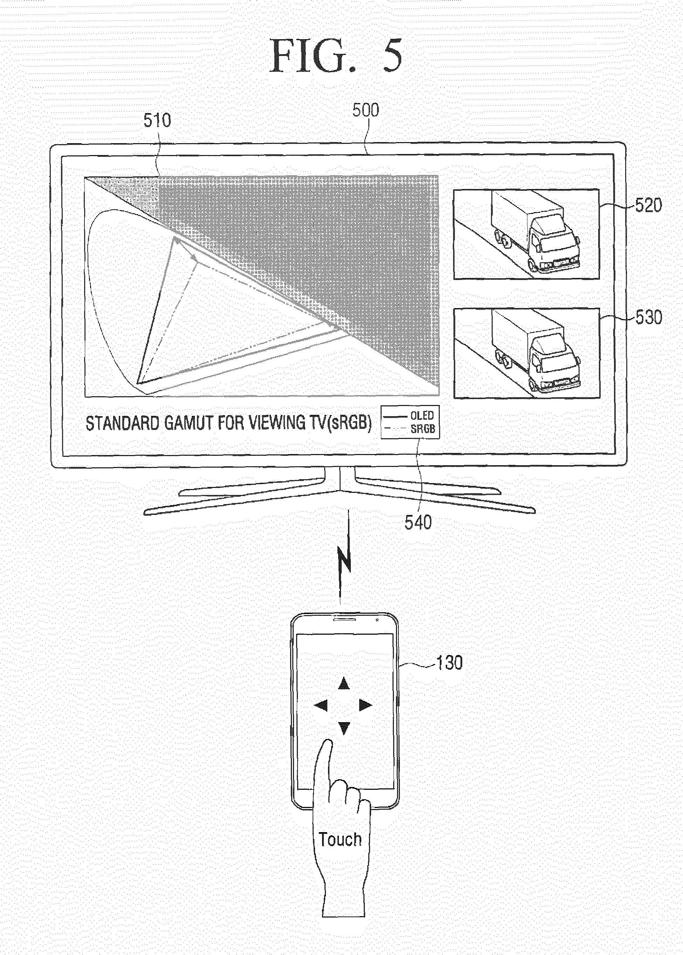

In addition, the display panel unit 120 may display various information provided by the display apparatus 100. Specifically, the display panel unit 120 may display a color gamut set of the display apparatus 100 and a color gamut of an input image signal, and may display a user interface window for receiving a color gamut to be applied to the input image signal. The detailed configuration of the user interface window will be explained later with reference to FIG. 5.

The manipulation unit 130 comprises a plurality of function keys through which a user sets or selects various functions supported by the display apparatus 100. The manipulation unit 130 may adjust a color gamut set of the display apparatus 100. That is, the manipulation unit 130 may receive a color gamut to be applied to a currently input image signal. In the exemplary embodiment, the display panel unit 120 and the manipulation unit 130 are elements which are separated from each other, but they may be embodied as an apparatus such as a touch pad which may perform input and output simultaneously.

The determination unit 140 determines a color gamut of an input image signal. Specifically, if a device providing an image signal is changed, the determination unit 140 may determine a color gamut of an input image signal based on format title or color standard information of the input image signal (for example, sRGB standard information). For example, if an input image signal is in a broadcast signal format, the determination unit 140 may determine a color gamut of the input image signal is sRGB color gamut since the standard color gamut of a broadcast signal is sRGB color gamut.

In addition, the determination unit 140 may determine a color gamut based on apparatus information of a device which provides an image signal. Herein, the apparatus information may be information regarding a device category (for example, a set-top box, a DVD player, and etc.) and color gamut of an image signal output from the device. For example, if it is determined that a device providing an image signal is a set-top box, the determination unit 140 may determine a color gamut of the input image signal is sRGB color gamut since a set-top box is a device which provides a broadcast signal format and the standard color gamut of a broadcast signal is sRGB color gamut.

The adjustment unit 150 adjusts a color gamut of the display apparatus 100 (or a color gamut of the display panel unit 120, hereinafter referred to as 'a color gamut of the display apparatus 100') based on a determined color gamut. Specifically, if a determined color gamut is within a color gamut supported by the display panel unit 120, the adjustment unit 150 may adjust a color gamut of the display apparatus 100 to the determined color gamut of the image signal.

For example, suppose that a color gamut of red color supported by a display panel is 0∼100 and a color gamut of red color currently set in the display apparatus 100 is 20∼80. In this case, if a color gamut of red color in an input image signal is 10∼90, a color gamut of red color of the display apparatus 100 may be adjusted to 10∼90. In the exemplary embodiment, a color gamut of red color is adjusted for convenience of explanation, but R/G/B may also be adjusted in an exemplary embodiment as described above.

In addition, the adjustment unit 150 may adjust a color gamut of the display apparatus 100 according to a set color gamut. Specifically, the adjustment unit 150 may adjust a color gamut of the display apparatus 100 to a color gamut set by a user through the manipulation unit 130. For example, if a user adjusts a color gamut to 15∼75 while a color gamut of red color of the display apparatus 100 is 20∼80, the manipulation unit 150 may adjust a color gamut of red color of the display apparatus 100 to 15∼75.

The image compensation unit 160 may perform signal processing such as video decoding and video scaling with respect to an input image signal.

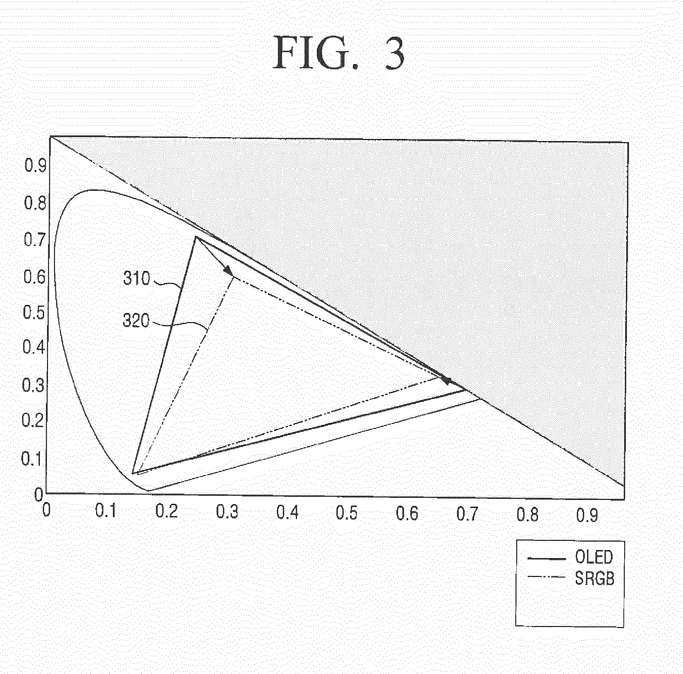

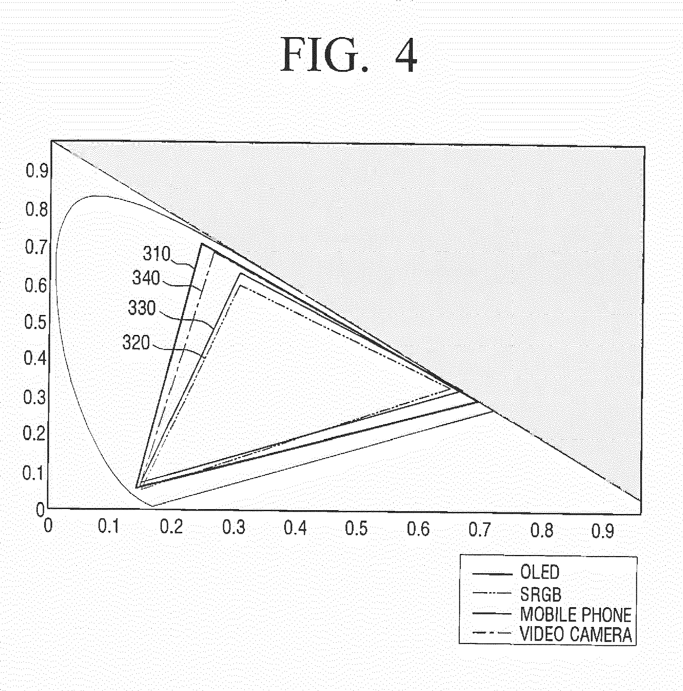

In addition, the image compensation unit 160 performs color compensation of an input image signal so that a color gamut of the image signal is to be within a color gamut of an adjusted display panel unit. Specifically, the image compensation unit 160 may perform color compensation of an input image signal according to a color gamut set in the display apparatus 100. The detailed operation of the image compensation unit 160 will be explained later with reference to FIGS. 3 and 4.

The control unit 170 controls each element of the display apparatus 100. Specifically, if an image signal is input through the signal input unit 110, the control unit 170 may control the determination unit 140 to determine a color gamut of the input image signal. Subsequently, the control unit 170 may control the adjustment unit 150 to adjust a color gamut of the display apparatus 100 according to the determined color gamut, control the image compensation unit 160 to perform color compensation with respect to the input image signal according to the adjusted color gamut, and control the display panel unit 120 to display an image by providing the color compensated to the display panel unit 120.

If a command to adjust a color gamut is received from the manipulation unit 130, the control unit 170 may control the display panel unit 120 to display a user interface window for adjusting a color gamut and control the adjustment unit 150 to adjust a color gamut received from the manipulation unit 130 to be a color gamut of the display apparatus 100.

As such, the display apparatus 100 according to an exemplary embodiment may change a color gamut of the display apparatus 100 adaptively according to an input image signal and thus, an optimum image may be provided according to each image signal. In addition, as a user directly adjusts a color gamut of a display apparatus rather than adjusting a RGB value, user convenience may be enhanced.

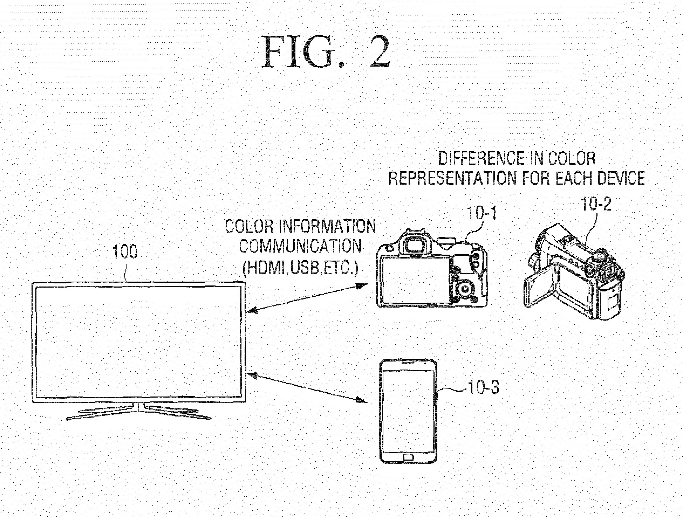

FIG. 2 illustrates an operation of a display apparatus according to an exemplary embodiment.

Referring to FIG. 2, the display apparatus 100 may be connected to various external apparatuses 10-1, 10-2, 10-3. Herein, each of the external apparatuses 10-1, 10-2, 10-3 may provide to the display apparatus 100 an image signal which is stored or generated according to different color standards. Accordingly, a color gamut of an image signal may vary depending on an external apparatus.

Therefore, the display apparatus 100 according to an exemplary embodiment determines a color gamut of an image signal transmitted from external apparatuses 10-1, 10-2, 10-3 by receiving information regarding the corresponding apparatus from the external apparatuses 10-1, 10-2, 10-3 connected to the display apparatus 100 or based on format title or color standard information of the image signal.

Subsequently, a color gamut of the display apparatus 100 may be adjusted according to the determined color gamut and the input image signal may be displayed according to the adjusted color gamut of the display apparatus 100.

Accordingly, the display apparatus 100 may display an image in a color gamut optimum for the input image signal.

FIGS. 3 and 4 illustrate an operation of an image compensation unit.

Referring to FIG. 3, two color gamuts are displayed. One is a color gamut 310 supported by the display panel unit 120 of the display apparatus 100 and the other is a color gamut 320 supported by an input image signal. As described above, the adjustment unit 150 may adjust a color gamut of the display apparatus 100 to a color gamut of a currently input image signal.

In this case, as the color gamut 310 of the display apparatus 100 is different from a color gamut 320 supported by the display panel unit 120, color compensation should be performed with respect to an input image signal. For example, if the color gamut 320 supported by the display panel unit 120 is 0∼100 while a color gamut 310 set in the display apparatus 100 and a color gamut of an input image signal is 20∼80, the image compensation unit 160 may perform mapping between the color gamut 320 supported by the display panel unit 120 and the color gamut 310 set in the display apparatus 100 and perform color compensation with respect to an input image signal based on the mapping result. That is, the compensation unit 160 may change a color grayscale value of an input signal to a grayscale value of the display panel unit 120 corresponding to the color grayscale value and provide the changed grayscale value to the display panel unit.

Referring to FIG. 4, four color gamuts are displayed. One is the color gamut 310 which the display panel unit 120 of the display apparatus 100 supports, another is the color gamut 320 which an image signal provided by a set-top box supports, another is a color gamut 330 which an image signal provided by a mobile phone supports, and the other is a color gamut 340 which a video camera supports.

Accordingly, whenever an image signal changes, that is, whenever a device providing an image signal changes, the adjustment unit 150 may adjust a color gamut of the display apparatus 100 to a color gamut of a currently input image signal, and the image compensation unit 160 may perform color compensation with respect to the input image signal to a color gamut set in the display apparatus 100.

FIG. 5 illustrates an example of a user interface window according to an exemplary embodiment.

Referring to FIG. 5, a user interface window 500 comprises a first area 510, a second area 520, a third area 530, and a fourth area 540.

The first area 510 is an area to display a determined color gamut and a color gamut of a display panel unit. Specifically, the first area 510 displays a color gamut of a currently input image signal determined by the determination unit 140 along with a color gamut supported by the display panel unit 120.

The second area 520 is an area to display a preview image according to a current color gamut of a display panel unit. Specifically, the second area 520 displays a preview image corresponding to a color gamut currently set in the display apparatus 100.

The third area 530 is an area to display the second preview image according to an adjusted color gamut. Specifically, the third area 530 displays a preview image corresponding to a color gamut adjusted through user manipulation.

The fourth area 540 is an area to display information regarding an input image signal. Specifically, the fourth area 540 displays information regarding an apparatus which provides an image signal or information regarding an image signal.

Accordingly, a user may adjust a color gamut of the display apparatus 100 through the manipulation unit 130 and the user interface window 500. If a user adjusts a color gamut, the adjustment unit 150 may adjust a color gamut adjusted by a user to a color gamut of the display apparatus 100.

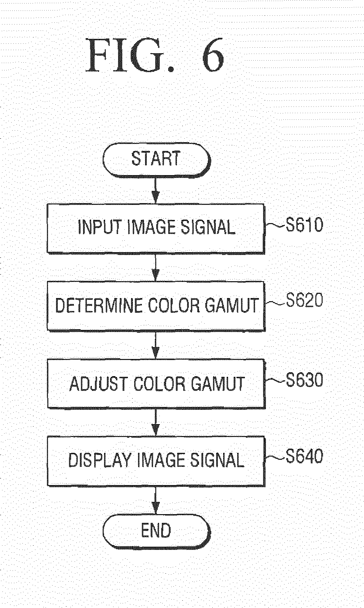

FIG. 6 is a flowchart to illustrate a method for displaying an image according to an exemplary embodiment.

Referring to FIG. 6, an image signal is input (S610). Herein, the image signal may be a broadcast signal which is transmitted from a broadcasting station, a satellite dish, etc., image content transmitted from a DVD player, a Blue Ray player, etc., or an image content transmitted from a mobile phone, a personal computer, etc. The image signal may be received through a wired connection, a wireless connection, over a network, etc.

Subsequently, a color gamut of an input image signal is determined (S620). Specifically, if a device providing an image signal is changed, a color gamut of an input image signal may be determined based on format title or color standard information of the input image signal (for example, sRGB standard information). In addition a color gamut may be determined based on apparatus information of a device which provides an image signal. Herein, the apparatus information may be information regarding a device category (for example, a set-top box, a DVD player, etc.) and color gamut of an image signal output from the device.

Subsequently, a color gamut of the display panel is adjusted based on the determined color gamut (S630). Specifically, if the determined color gamut is within a color gamut supported by a display panel, a color gamut of the display apparatus 100 may be adjusted to the determined color gamut of the image signal.

The image signal is displayed in the adjusted color gamut of the display panel (S640).. Specifically, the color of the input image signal may be compensated according to a color gamut set in the display apparatus 100, and the color compensated image signal may be displayed.

The method for displaying an image according to an exemplary embodiment allows a user to change a color gamut of the display apparatus 100 adaptively according to an input image signal and thus provides an optimum image according to each image signal. The method for displaying an image in FIG. 6 may be performed not only in a display apparatus having configuration illustrated in FIG. 1 but also on a display apparatus having other configurations.

Although exemplary embodiments have been shown and described, it would be appreciated by those skilled in the art that changes may be made to these exemplary embodiments without departing from the principles and spirit of the inventive concept, the scope of which is defined in the claims and their equivalents.

## Claims

1. A display apparatus (100), comprising:
an input unit (110) which receives an image signal;
a display panel unit (120);
a determination unit (140) which determines a color gamut of the input image signal;
an adjustment unit (150) which adjusts a color gamut of the display panel unit based on the color gamut of the image signal; and
a control unit (170) which controls the display panel unit to display the image signal within the adjusted color gamut of the display panel unit.

2. The apparatus as claimed in claim 1, wherein the determination unit determines the color gamut of the image signal based on at least one of among information regarding a format title of the image signal and information regarding color standard of the image signal.

3. The apparatus as claimed in claim 1, wherein the determination unit determines the color gamut of the image signal based on apparatus information of a device which outputs the image signal to the input unit.

4. The apparatus as claimed in one of claim 1 to claim 3, wherein the input unit is configured to receive the image signal from a plurality of devices, including a first device and a second device, and
the determination unit determines a color gamut of the image signal in response to a determination that the input unit has ceased outputting the image signal received from the first device and begun outputting the image signal received from the second device.

5. The apparatus as claimed in one of claim 1 to claim 4, wherein the adjustment unit adjusts the color gamut of the display panel unit match the color gamut of the image signal in response to a determination that the color gamut of the image signal is within a color gamut supported by the display panel unit.

6. The apparatus as claimed in one of claim 1 to claim 5, further comprising a manipulation unit (130) which receives user input,
wherein the adjustment unit adjusts the color gamut of the display panel unit based on the user input, and
the display panel unit displays the color gamut of the image signal and thecolor gamut of the display panel unit based on the user input.

7. The apparatus as claimed in claim 6, wherein the display panel unit displays a user interface window including a first area (510) which displays the color gamut of the image signal and the color gamut of the display panel unit, a second area (520) which displays a first preview image according to the color gamut of the display panel unit, and a third area (530) to display a second preview image according to the color gamut based on the user input.

8. The apparatus as claimed in claim 7, wherein the user interface window further comprises:
a fourth area which displays information regarding the image signal.

9. The apparatus as claimed in one of claim 1 to claim 8, further comprising:
an image compensation unit (160) which performs color compensation to compensate the image signal according to the color gamut of a display panel unit and outputs a color compensated image signal,
wherein the display panel displays the color compensated image signal.

10. The apparatus as claimed in one of claim 1 to claim 9, wherein the display panel unit is an Organic Light Emitting Diode (OLED) panel.

11. A method for displaying an image using a display panel, comprising:
receiving (S610) an image signal;
determining (S620) a color gamut of the image signal;
adjusting (S630) a color gamut of the display panel unit based on the color gamut of the image signal; and
displaying (S640) the image signal within the color gamut of the display panel unit.

12. The method as claimed in claim 11, wherein the determining comprises determining the color gamut of the image signal based on at least one of among information regarding a format title of the image signal and information regarding color standard of the image signal.

13. The method as claimed in claim 11 or claim 12, further comprising:
displaying the color gamut of the input signal and the color gamut of the display panel unit; and
receiving user input,
wherein the adjusting comprises adjusting the color gamut of the display panel unit based on the user input.

14. The method as claimed in claim 13, wherein the displaying comprises displaying a user interface window including a first area which displays the color gamut of the input signal and the color gamut of the display panel unit, a second area to display a first preview image according to the color gamut of the display panel unit, and a third area to display a second preview image according to the color gamut based on the user input.

15. The method as claimed in claim 14, wherein the user interface window further comprises:
a fourth area which displays information regarding the image signal.
